# EUROPEAN PATENT APPLICATION

(11) **EP 3 163 485 A1**
(43) Date of publication of application: **03.05.2017**
(21) Application number: 16195620.6
(22) Date of filing: 25.10.2016
(51) Int. Cl.: G06F 21/32

(54) **SYSTEM AND METHOD FOR MULTI-FACTOR BIOMETRIC AUTHENTICATION**

(30) Priority: 26.10.2015 CN 201510702523
(71) Applicant: Schneider Electric IT Corporation, West Kingston, RI 02892 (US)
(72) Inventor: Liu, JiDong, Shanghai, 200135 (CN)
(74) Representative: Hayden, Nicholas Mark

(57) **Abstract**

A system and corresponding method for multi-factor biometric authentication are provided, comprising the steps of: detecting a series of biometric signals captured by a sensor, accessing a predefined series of biometric signals stored in a storage device, and using an authentication processor to compare said detected series of biometric signals with said stored, predefined series. In case of positive match, an authentication signal is transmitted by the authentication processor.

## Description

### BACKGROUND

### Field of Invention

Embodiments of the present invention relate generally to systems and methods for authentication, and more specifically to systems and methods for multi-factor biometric authentication.

### Discussion of Related Art

In this digital age, if information is not adequately protected, it may be compromised by accident or design and cause an information breach. Consequences of such breaches may be severe. For businesses, where information is a form of commerce, a breach may entail regulatory and corresponding financial penalties, punitive legal action, and loss of reputation and business. For an individual, identity theft and damage to financial history may take years to resolve and cost thousands of dollars. Information and the protection of it, represents a critical and complex issue for modem society as a whole.

Most information systems today typically require some form of authentication to confirm the identity of an individual or system seeking to gain access. This authentication may be a simple pairing of two elements such as a "user name" and associated "password." Other more complicated authentication groupings may exist where a third element, such as a physical token, is included, where all the information must be known to grant access. This paradigm may create several problems for an individual or system seeking to gain authorized access. First, is the number of required element permutations to recall for each authentication, which may number in the several dozens for an individual. Second, are programs generically known as "password keepers" that with knowledge of a single pairing of "username" and "password" may reveal all authentication elements for an individual or system. Finally, while convenient, storage of such authentication credentials in a typical computer browser, may lead to unauthorized access by individuals who gain access to a computer terminal itself, or intercept the transmitted stream of information from such a device.

Unlike the use of other forms of authentication, such as a unique pairing of elements, for example, "usernames" and "passwords," biometric authentication provides a very strong linkage between an individual and a claimed identity. Utilization of biometric identification may also be combined with more typical authentication such as the pairing of elements as described above. In this way authentication from multiple independent categories may be created to allow a multi-factor authentication system. Such a system employs not only specific user knowledge, but also characteristics unique to only the individual to be authenticated, thereby creating both a very secure and easily recalled authentication sequence.

### SUMMARY

Biometric authentication allows for an individual to be their own password. In cases where a single biometric signal is required with no other authentication, even if biometric in nature, that authentication may be fairly simple to circumvent. Principles of the present invention allow permutations of biometric (*inherence*) authentication coupled with *knowledge* based authentication to allow an individual to be their own password and couple *knowledge* based authentication, creating multi-factored authentication that is both easy for a user to recall while being very secure.

Aspects of the present invention relate generally to multi-factor biometric authentication. Principles of the invention provide systems and corresponding methods for multi-factor biometric based authentication and access control systems. These systems may include a sensor configured to detect a series of biometric signals, a storage device configured to store a predefined series of biometric signals, and an authentication processor that compares the series of biometric signals received from the sensor to the predefined series of biometric signals stored and transmits an authentication signal if the detected and predefined biometric signals match.

Principles of the invention further demonstrate that the authentication and access control systems may further define the series of biometric signals be created by one of a fingerprint, palm print, vein pattern, or any permutation thereof. The authentication and access control systems may also include the authentication signal to cause automatic execution of physical access, electronic access, or transmission of information. The authentication and access control systems may also be further comprised of a communication interface. The authentication and access control systems may also be further comprised of a lock mechanism. The authentication and access control systems may also be comprised of an authentication server that contains the predefined series of biometric signals. The authentication and access control systems may also be comprised of a display coupled to the sensor configured to detect the series of biometric signals where the display may be configured to detect the series of biometric signals at any location within the display.

Principles of the invention further demonstrate that the authentication and access control method may include detecting, a series of biometric signals with a sensor, accessing a predefined series of biometric signals from a storage device, comparing the series of biometric signals received from the sensor to predefined series of biometric signals accessed from the storage device with an authentication processor and, transmitting an authentication signal if the detected and predefined biometric signals match.

Principles of the invention further demonstrate that the authentication and access control methods may detect biometric signals created by one of a fingerprint, palm print, vein pattern, or any permutation thereof. The authentication and access control method may transmit an authentication signal automatically, which authorizes physical access, electronic access, or transmission of information. The authentication and access control method may further comprise transmitting the sensed biometric signals, predefined series of biometric signals, or authentication signal through a communication interface to an external network. The authentication and access control method may further comprise articulating a lock mechanism on transmitting the authentication signal. The authentication and access control method may further comprise communicating with an authentication server configured to process the predefined series of biometric signals. The authentication and access control method may further comprising a display coupled to the sensor configured to detect the series of biometric signals at any location within the display.

### BRIEF DESCRIPTION OF THE DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. **1** is a functional block diagram of a system in accordance with one embodiment of the present invention;
FIG. **2** is a functional block diagram of a system in accordance with one embodiment of the present invention;
FIG. **3** is a flowchart of a process that may be implemented in accordance with one embodiment of the invention;
FIG. **4** is a functional block diagram of a system in accordance with one embodiment of the present invention;
FIG. **5** is a pictorial representation of possible biometric data points used in accordance with embodiments of the present invention;
FIG. **6** is a pictorial representation of a system in accordance with embodiments of the present invention.

### DETAILED DESCRIPTION

This invention is not limited in its application to the details of construction and the arrangement of components set forth in the following descriptions or illustrated by the drawings. The invention is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e. "including but not limited to."

In today's world, if information is not adequately protected, it may be compromised by accident or design and cause an information breach. Consequences of such breaches may be severe and punitively expensive.

To protect information, authentication of the individual or system seeking to gain access is performed through a series of challenges or authentication factors. An authentication factor may be a category of credential used to verify an identity. One category of authentication factor is the *knowledge factor,* which is generally defined as a user having specific knowledge, such as a username or password permutation. A second category of authentication factor is the *possession factor*, which is generally defined as a user physically possessing an object, such as a keycard. A third category of authentication factor is the *inherence factor,* which is generally defined as a fundamental biological trait of the user, such as a fingerprint. When multiple factors are used in concert to authenticate a user, a multi-factor authentication system is formed.

Other authentication factors exist as do several examples of characteristics within each existing authentication factor. Examples and permutations of which may include, but are not limited to, Global Positioning System (GPS) location, time, security tokens, proximity card devices, "behaviormetrics" (*how* a person acts is measured, such as the gait of an individual's walk), plethysmography (volume of an individual's particular body part is measured), human generated bio-electric fields, ear lobe geometry, blood composition, and DNA sequencing, among others.

Aspects of the present invention relate generally to multi-factor biometric authentication that include systems and corresponding methods for multi-factor biometric based authentication and access control systems. This satisfies the need for a multi-factor authentication system to employ not only specific user knowledge *(knowledge factor* authentication), but also characteristics unique to only an individual to be authenticated (*inherence factor* authentication), thereby creating both a very secure and easily recalled authentication sequence.

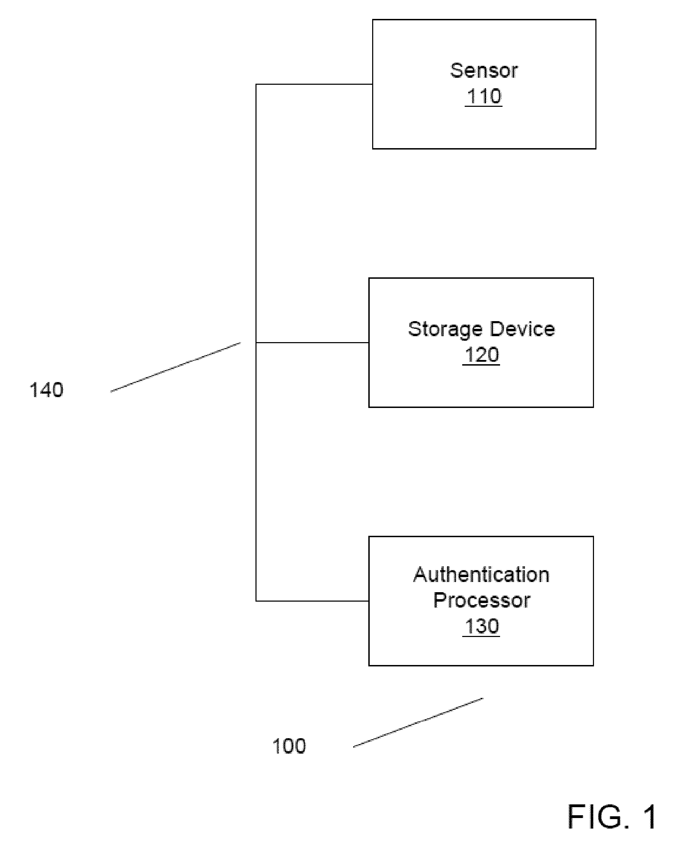

FIG. **1** includes many exemplary systems for multi-factor biometric authentication in accordance with principles of the invention **100.** A sensor **110** is connected to a storage device **120,** and authentication processor **130.** These devices are connected via a network **140.**

A sensor **110** may be capable of receiving biometric signals generally considered *inherence* authentication factors. These factors may include but are not limited to, fingerprint, palm vein, wrist vein, retinal pattern, signature, facial, vocal, bio-electric, hand geometry, and iris recognition. This sensor may contain a single sensing element, or a plurality of sensing elements that may receive multiple biometric signals simultaneously, sequentially, time based, or in any other pattern. A sensor **110** may also be capable of displaying other information such as a virtual keyboard with a pictograph set to allow a biometric signal to be received at a particular location corresponding to a particular pictograph, thereby creating a multi-factor (*inherence* and *knowledge* based) authentication sequence.

A storage device **120** may include a computer readable and writeable nonvolatile recording medium in which information or signals are stored to perform one or more functions associated with embodiments described herein. The medium may, for example, be a flash memory. Typically, in operation, a processor **130** causes data to be read from the nonvolatile recording medium into another memory which allows for faster access to the information by the processor **130** than does the computer readable and writable medium. This memory is typically a volatile, random access memory such as a Dynamic Random Access Memory (DRAM) or Static Random Access Memory (SRAM). It may be located as part of a larger storage system, a processor **130,** or in another memory system. A processor **130** generally manipulates the data within the integrated circuit memory and then copies the data to the medium after processing is completed. A variety of mechanisms are known for managing data movement between the medium and the integrated circuit memory element and the invention is not limited thereto. It should be appreciated the invention is not limited to a particular memory system or storage system **120.**

An authentication processor **130** may be, for example, based on Intel PENTIUM-type processor, Motorola PowerPC, Sun UltraSPARC, Hewlett-Packard PA-RISC processors, or any other type of processor. The authentication processor **130** may also be based on an embedded processor, System on a Chip (SoC), Application Specific Integrated Circuit (ASIC), Field Programmable Gate Array (FPGA), or any other type of processor specific to an embedded application. Aspects of the invention may be implemented in software, hardware, firmware, or any permutation thereof. Further, such methods, acts, systems, system elements, and components thereof may be implemented as part of the computer system described above or as an independent component. The authentication processor **130** may perform a wide range of computational tasks of a general or specific nature relating to the operation of the system depicted in FIG **1****.** As an illustrative example, one function may be to compare a series of biometric signals detected from the sensor **110** to a set of predefined biometric signals received from the storage device **120.** If the biometric signals detected from the sensor **110** matches the set of predefined biometric signals received from the storage device **120,** an authentication signal may be transmitted.

Connecting the sensor **110,** storage device **120,** and authentication processor **130** is a network **140.** This network may be made up of wired, wireless, or a hybrid comprising both types of connections. Wired connection types may include, but are not limited to, any physical cabling method such as category 5 cable, coaxial, fiber, or any other physical media to propagate electrical signals for purposes that may include providing power to a device, transmission of data, or both, such as Power Over Ethernet (POE). Wireless data connections may include, but are not limited to Personal Area Networks (PAN), Local Area Networks (LAN), Wi-Fi, Bluetooth, cellular, global, or space based communication networks. It is well understood that these types of computing devices illustrated within an example of the system **100** shown in FIG. **1** are intended to be illustrative only and that computing nodes and various networking environments may communicate with any type of computerized device over any type of network with addressable or direct connections.

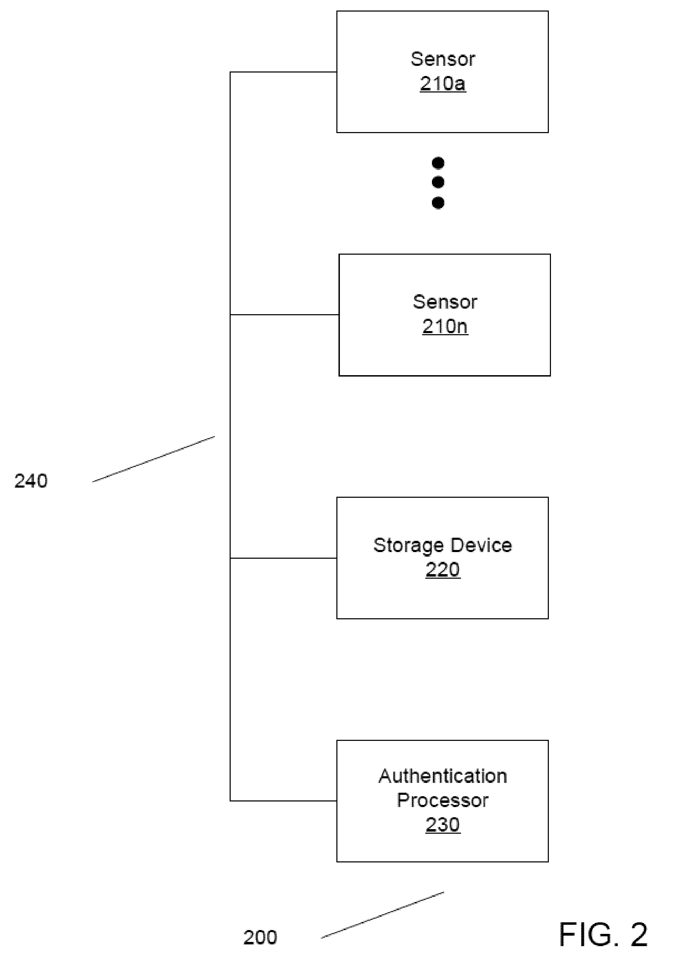

FIG. **2** also includes many exemplary systems for multi-factor biometric authentication in accordance with principles of the system invention **200.** A plurality of sensors **210a - 210n** is connected to a storage device **220,** authentication processor **230,** and network **240.** Each of these components is detailed supra with their corresponding elements and descriptions from FIG. **1****.**

In FIG. 2 the plurality of sensors **210a - 210n** may be capable of receiving biometric signals of any type. Each sensor may be capable of receiving one or multiple types of biometric signals. Any combination of such sensors may be used in an effort to increase the number of authentication factors and as a result increase an overall security level.

As one of many possible examples, a system may include both a biometric sensor designed to receive vocal patterns **210a** and a biometric sensor designed to receive fingerprint patterns **210n.** Both sensors may accept correct biometric inputs simultaneously, in a particular sequence, or within a periodic time. A storage device **220** may retain a predetermined sequence of biometric signals for the plurality of sensors, which may be processed by an authentication processor **230.** In such a case the plurality of biometric sensors must each be presented correct biometric signals for an authentication signal to be transmitted. It is noteworthy that each sensor **210a - 210n** need not be capable to receive only biometric inputs. Other sensors which may accept a physical object (*possession factor* authentication), such as a proximity card detector, or which may require knowledge (*knowledge factor* authentication), such as a keypad, may also be utilized within the plurality of sensors.

An example of the plurality of sensors being a combination of *knowledge, possession,* and *inherence factors,* may include a keypad sensor requiring *knowledge* of a Personal Identification Number (PIN), a proximity sensor requiring a user to *possess* a keycard, and a retina scanner to detect particular *inherent* patterns of a users' inner eye. In this way not only may a plurality of sensors be utilized in a system, but a plurality of sensor types may be used in a system.

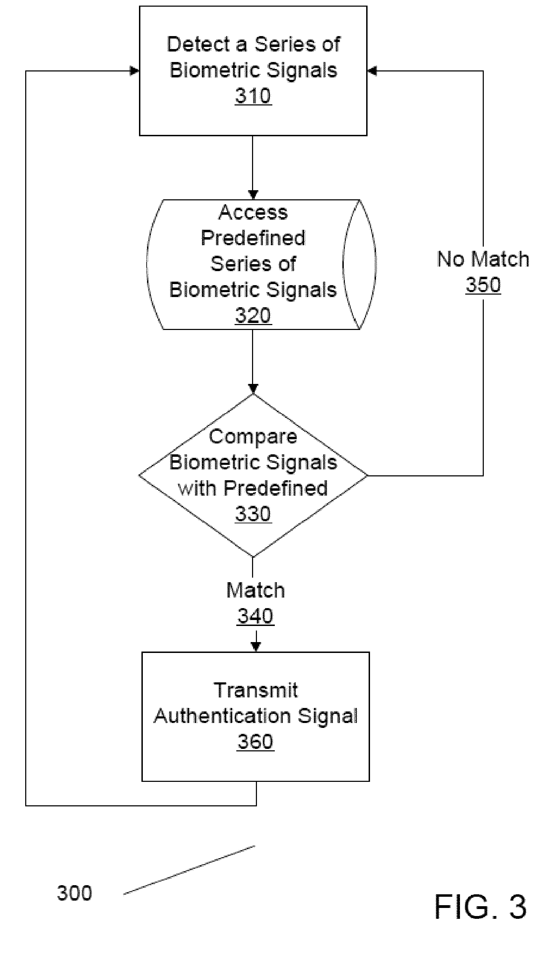

FIG. **3** includes a flowchart of a process that may be implemented in accordance with embodiments of the invention for multi-factor biometric authentication **300.** To begin a sequence, a series of biometric signals is detected **310** by a sensor **110, 210a-210n.** This detection may be a single biometric detection, a series of biometric detections, or several simultaneous biometric detections. Upon receipt of such biometric signals, embodiments of the multi-factor biometric authentication system **100, 200** access a predefined series of biometric signals **320** which may have been retained in a storage device **120, 220** through a process of enrolment or importation from another data source. Such an enrolment process will allow at least one predefined series of biometric signals and allow a basis for a comparison.

Once a series of biometric signals is detected **310** by a sensor **110, 210a-210n** and a predefined series of biometric signals has been accessed **320** which may have been retained in a storage device **120, 220** the two sets of biometric signals are compared **330.** It should be noted based on the size of the storage device **120, 220** a large number of predefined biometric signals may be stored. This may require substantial processing capacity from the authentication processor **130, 230** which may contain specialized software, firmware, or co-processing ability to prioritize the comparison of the detected biometric signals **310** and predefined series of biometric signals **320.** This may be the case as providing a user an authentication signal without substantial perceived delay is a user experience factor. It should be appreciated by those skilled in the art, the comparison of the biometric signals **330** may be accomplished by a variety of available methods.

Once the comparison of the biometric signals **330** is completed, a determination may be made if the signals match through the use of the authentication processor **130, 230.** If a match of the biometric signals does not exist **350,** an authentication signal is not transmitted and the process will return to detecting a series of biometric signals **310.** If however these biometric signals do match **340,** an authentication signal will be is transmitted **360** and the process will return to detecting a series of biometric signals **310.**

Principles of the invention allow for a variety of uses for the transmitted authentication signal **360.** Such a signal may permit or automatically execute any number of actions for physical access, electronic access, or transmission of information. For physical access, the transmitted authentication signal **360** may be used to grant physical access to a building, room, container, vessel, or any other enclosure type through articulation of one or more individual or grouped lock mechanisms. Electronic access may be granted to any number of electronic resources, one example may be access to a program to transmit and receive email, on transmission of the authentication signal **360.** It should be appreciated access to any such resource may be possible. Further, the transmitted authentication signal **360** may be used to transmit sensitive information such as banking information as part of a commercial purchase. Various embodiments will provide for a wide array of systems and access types utilized in the state of the art.

An illustrative example may be a modem data center that requires the authentication of users for entry into the data center room itself that may be controlled by a single or multiple lock mechanisms as well as access into individual racks that may contain Information Technology (IT) equipment within the data center each may have their own individual lock mechanisms. As the number of individuals authenticated for access to the data center room itself may be larger than that of any single IT rack, various authentication points would be required as would various authentication levels. So while a security guard may be able to enter the data center room itself which may be accessed by one lock mechanism, to visually inspect the racks of equipment, it may also properly deny authorization to enter any IT rack outside the purview of the security guard which also maintains a lock mechanism requiring separate authentication. Examples of such tiered security paradigms are replete within the industry and principles of the invention align themselves well to such security paradigms.

It should be appreciated, principles of the invention allow for a variety of embodiments utilizing the process shown in FIG. **3****.** In various embodiments, when the authentication process **300** compares biometric signals **330** on either a match of the signals **340,** or no match of the signals **350,** the process terminates creating a onetime opportunity for a user to be correctly authenticated before the state of the system changes, which may include disabling the system indefinitely, for a period of time, or some fixed number of attempts to authenticate. Further, other signals may be sent by the authentication processor **130, 230** in addition to the authentication signal **360,** which may include alerting authorities, enabling other security measures, or disabling any systems the authentication is intended to protect. In one embodiment as an alternative to an authentication signal, a duress signal may be sent to take action in such an event such as erasing an electronic device or altering appropriate authorities, among others.

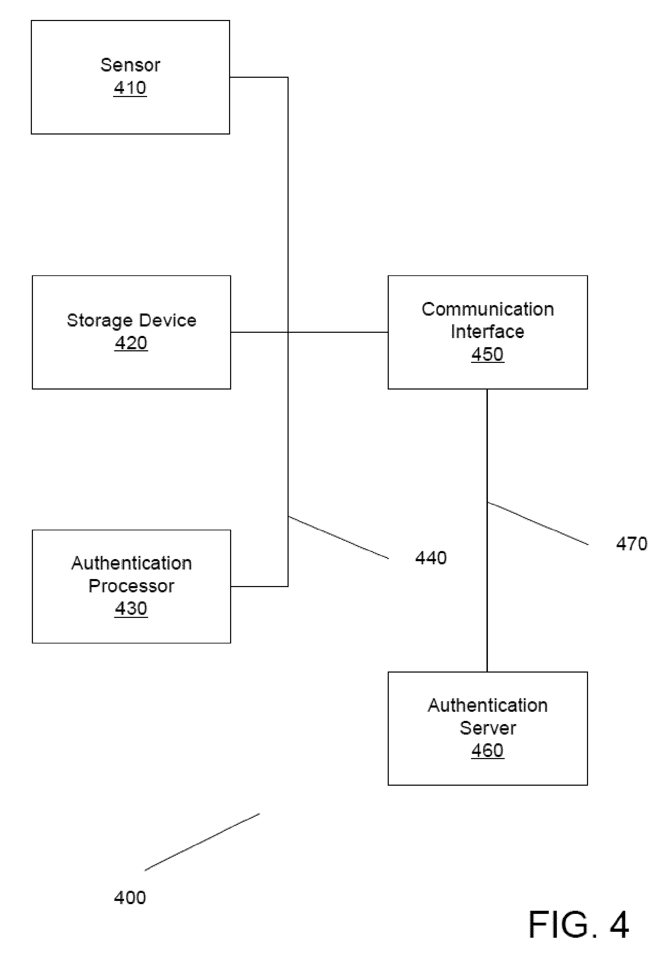

It should be appreciated by one skilled in the art that a variety of embodiments of the system shown in FIG **4** in accordance with embodiments of the invention **400** while utilizing the various embodiments of the process flow depicted in FIG **3** are possible. In one embodiment a sensor **410** is connected to a storage device **420,** and authentication processor **430.** These devices are connected via a network **440.** In addition, a communication interface **450** is connected to an external network **470,** which in turn is connected to an authentication server **460.** In this embodiment the sensor **410,** storage device **420,** authentication processor **430,** and network **440** are operated in a manner detailed supra with reference to FIG. 1, FIG. **2****,** and FIG **3****.** In addition, the communication interface **450** may be of a wired or wireless type and utilize a communication protocol, such as TCP/IP to effect communication between devices. It should be appreciated that that the invention is not limited to any particular distributed architecture, network, or communication protocol and may communicate any signal from embodiments of the invention **400** across any external network **470** to any other networked structure, such as the cloud for use in any application that may make use of such data.

In alternate embodiments a specific authentication server **460** may be used in place of, in conjunction with, or in addition to the storage device **420** or authentication processor **430.** It should be appreciated by those familiar with the state of the art such authentication servers exist in such forms as Active Directory or RADIUS and are deployed to provide remote user authentication and accounting. Principles of the invention demonstrate the integration of other authentication servers **460** may substantially increase the number of users able to be authenticated without the need for enrolment of users and allow the integration of existing authentication infrastructure with the described principles of the invention.

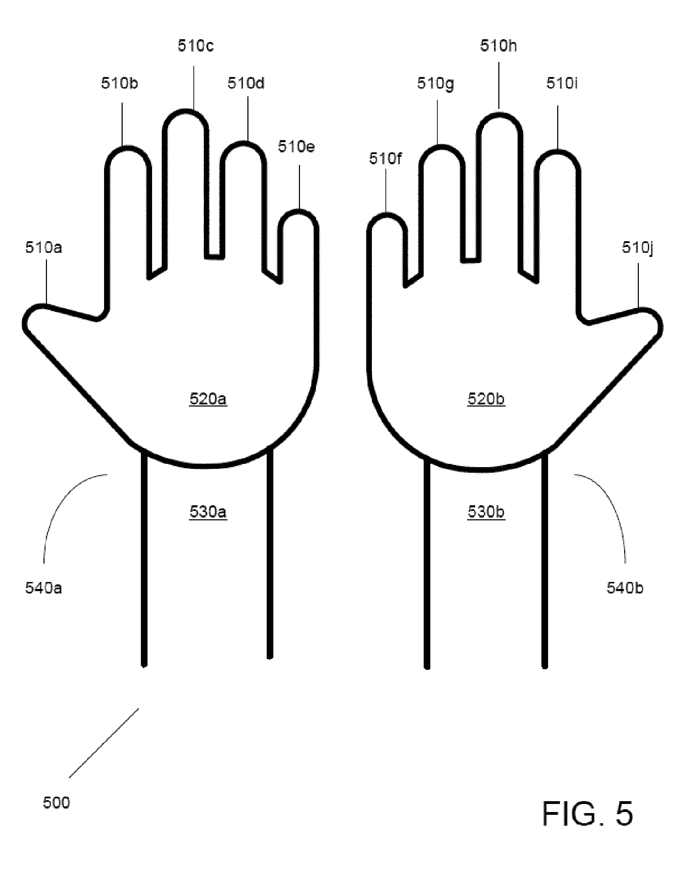

FIG. **5** depicts input criteria for an embodiment of the present invention. A set of human hands and wrists are depicted **500,** where the basic structures are noted which may be used as inputs for the sensor **110, 210a-210n, 410** to create biometric signals to be detected **310** and enrolled to be stored on the storage device **120, 220, 420** as the predefined series of biometric signals to be accessed **320.** A left hand and wrist **540a** and right hand and wrist **540b** are shown noting each has several structures that may be utilized individually, in sequence, or simultaneously, to create biometric signals for creating an authorization signal. These structures for the left hand **540a** may include the left thumb **510a,** left pointer finger **510b,** left middle finger **510c,** left ring finger **510d,** left pinky finger **510e,** left palm **520a** and, left wrist **530a.** For the right hand **540b** may include the right thumb **510j,** right pointer finger **510i,** right middle finger **510h**, right ring finger **510g**, right pinky finger **510f**, right palm **520b** and, right wrist **530b.** It is understood by those skilled in the art these structures may provide fingerprint, palm print, or vein pattern biometric signals, or any permutation thereof.

It is well understood that singular biometric inputs, such as a right hand index finger **510i** to a sensor **110, 210, 410** are regularly used to authenticate a wide array of technologies, such as a phone with an integrated biometric sensor dedicated to a human fingerprint. While such a method may be easy to remember and is readily accessible, it is also relatively insecure with both a set of fingerprints from a left **540a** and right **540b** hand as well as the technology to be accessed. In such as case even if only a single chance were given to access a technology, the probability would be 1 in 10 [10%]. However, principles of the invention demonstrate that biometric inputs, such as those provided by the structures in FIG. **5****,** may be presented in any permutation and in any length to allow for easily recalled, readily accessible, and extremely robust authentication.

In one embodiment, if a ten (10) element authentication string was necessary, and only the fingers of the left **510a - 510e** and right **510f - 510j** hands were used, presented sequentially, the probability for a correct authentication would now become (1/10)¹⁰ [.00000001%], far more robust than the generally available authentication available in the state of the art. Further embodiments consider the remaining structures in FIG **5****.** Such as the left **520a** and right **520b** palms and left **530a** and right **530b** wrists. Utilizing these additional structures further increases the robustness of the authentication process. It should be appreciated to those familiar with the state of the art, the number of elements required to present is limited only by the available resources within the system and may be quite large.

To ease the difficulty of recalling the precise sequence of biometric inputs available in FIG **5****,** each individual biometric element may be assigned a term for easy recall by a user. As an example, if the structures for the left hand **540a** are assigned left thumb **510a** "1", left pointer finger **510b** "2", left middle finger **510c** "3", left ring finger **510d** "4", left pinky finger **510e** "5", left palm **520a** "6" and, left wrist **530a** "7". For the right hand **540b** may be assigned right thumb **510j** "8", right pointer finger **510i** "9", right middle finger **510h** "0", right ring finger **510g** "11", right pinky finger **510f** "12", right palm **520b** "13" and, right wrist **530b** "14". An easy to recall, always available, and robust biometric sequence may be created by remembering 8-6-7-5-3-0-9 corresponding to right thumb **510j,** left palm **520a,** left wrist **530a,** left pinky finger **510e,** left middle finger **510c,** right middle finger **510h,** right pointer finger **510i.** It should be appreciate to one skilled in the art, other such assignments are possible to allow easily recalled yet robust biometric sequence inputs to allow multifactor authentication.

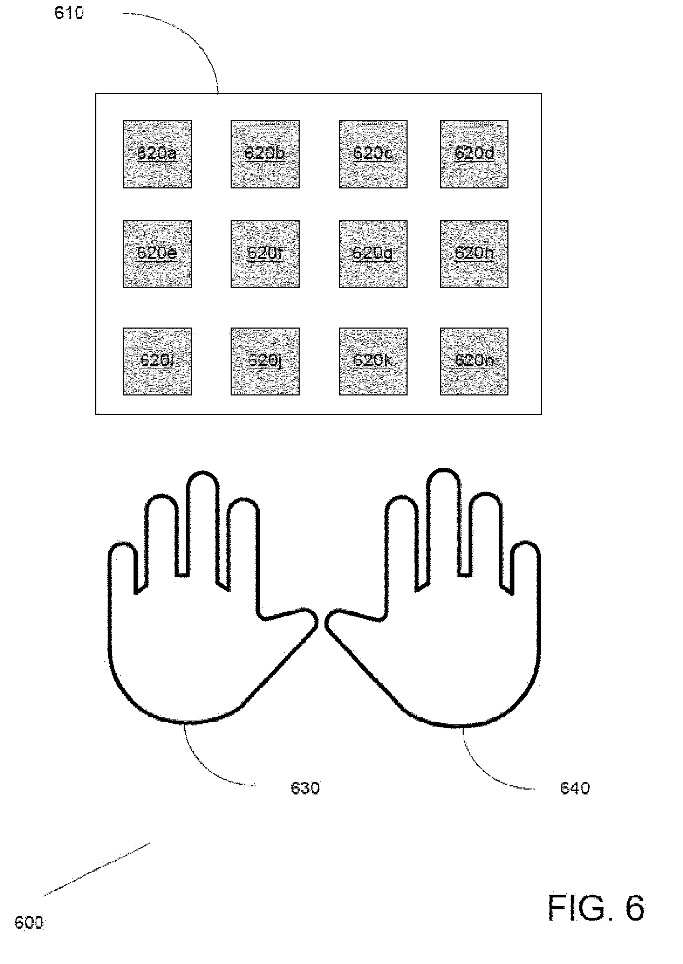

In another embodiment, the sensor **110, 201a-210n, 410** capable of detecting a series of biometric signals further comprises a display coupled to the sensor configured to detect the biometric signals. This coupling of display and sensor allow information to be presented to a user seeking to gain authentication. In yet another embodiment, the display coupled to the sensor configured to detect the biometric signals may detect the biometric signals at any location within the display coupled with a sensor. As an example and with reference to FIG. **6****,** a display coupled to the sensor configured to detect the biometric signals **610,** displays information such as, but not limited to alpha numeric characters, which correspond to locations on the display configured to receive biometric inputs **620a - 620n.** These biometric input sources such as a left hand **630** and right hand **640** comprise one embodiment of a complete multi-factor biometric authentication system **600.** Utilizing these embodiments adds yet another layer of authentication where a user must provide the correct biometric signal to the correct alpha numeric character displayed within the display coupled with a sensor. It should be appreciated that various embodiments exist with regard to the number, shape, or size of available biometric points available on the display as well as alpha numeric or other pictograph character sets which may be displayed on the display coupled to the sensor configured to detect the biometric signals **610.**

An illustrative example utilizing an embodiment of the system in FIG. 6 follows. From the previous example in FIG **5****,** the structures for the left hand **540a** are assigned left thumb **510a** "1", left pointer finger **510b** "2", left middle finger **510c** "3", left ring finger **510d** "4", left pinky finger **510e** "5", left palm **520a** "6" and, left wrist **530a** "7". For the right hand **540b** may be assigned right thumb **510j** "8", right pointer finger **510i** "9", right middle finger **510h** "0", right ring finger **510g** "11", right pinky finger **510f** "12", right palm **520b** "13" and, right wrist **530b** "14". This information is coupled with FIG. 6, where, the top left button **620a** shows the character "a" and moving from left to right and top to bottom, "c" **620b,** "e" **620c,** "d" **620d,** "1" **620e,** "o" **620f,** "s" **620g,** "t" **620h,** "p" **620i,** "u" **620j,** "n" **620k,** "k" **620n,** rows are formed that spell "aced", "lost", and "punk" respectively.

Using the above an easy to recall, always available, and robust biometric sequence may be created by remembering 8-6-7-5-3-0-9 corresponding to the biometric inputs **630, 640** and the word "paddles" corresponding to the represented images on the screen **610** where *knowledge* of both in addition to the proper biometric (*inherence*) inputs are necessary for authentication. In this example the user's right thumb **510j** must be touched to in screen character "p" **620i.** The sequence continues with left palm **520a,** left wrist **530a,** left pinky finger **510e**, left middle finger **510c**, right middle finger **510h**, right pointer finger **510i** corresponding to the word "paddles" represented images on the screen "p" **620i,** "a" **620a,** "d" **620d,** "d" **620d,** "1" **620e,** "e" **620c,** "s" **620g.** In this way *inherence* factor (the user's own physiological structures) is coupled with multiple *knowledge* factors (knowledge of what fingers corresponds to what number and a corresponding "password" on the screen **610).** It should be appreciate to one skilled in the art, other such assignments are possible to allow easily recalled yet robust biometric sequence inputs to allow multifactor authentication. Further as discussed supra other authentication types may be coupled with principles of the invention to provide further security.

Having thus described several aspects of at least one embodiment of this invention in considerable detail with reference to certain preferred version thereof, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings are by way of example only.

## Claims

1. An authentication and access control system, comprising:
a sensor configured to detect a series of biometric signals;
a storage device configured to store a predefined series of biometric signals; and
an authentication processor that compares the series of biometric signals received from the sensor to the predefined series of biometric signals and transmits an authentication signal if the detected and predefined biometric signals match.

2. The authentication and access control system of claim 1, wherein the sensor is further defined that the series of biometric signals is created by one of a fingerprint, palm print, or vein pattern or any permutation thereof.

3. The authentication and access control system of claim 1 or 2, wherein the authentication signal automatically executes one of physical access, electronic access, or transmits information.

4. The authentication and access control system of claim 1, 2 or 3, further comprising a communication interface.

5. The authentication and access control system of any preceding claim, further comprising a lock mechanism.

6. The authentication and access control system of any preceding claim, further comprising an authentication server connected to the authentication processor which contains the predefined series of biometric signals.

7. The authentication and access control system of any preceding claim, further comprising a display coupled to the sensor configured to detect the series of biometric signals at any location within the display.

8. A method of authentication and access control, comprising:
detecting, a series of biometric signals with a sensor;
accessing, a predefined series of biometric signals from a storage device;
comparing, the series of biometric signals received from the sensor to predefined series of biometric signals accessed from the storage device with an authentication processor; and
transmitting, an authentication signal if the detected and predefined biometric signals match.

9. The authentication and access control method of claim 8, wherein the sensor is configured to detect biometric signals created by one of a fingerprint, palm print, vein pattern, or any permutation thereof.

10. The authentication and access control method of claim 8 or 9, wherein the transmitting of an authentication signal automatically authorizes physical access, electronic access, or transmission of information.

11. The authentication and access control method of claim 8, 9 or 10 further comprising transmitting the sensed biometric signals, predefined series of biometric signals, or authentication signal through a communication interface to an external network.

12. The authentication and access control method of any of claims 8 to 11, further comprising articulating a lock mechanism on transmitting the authentication signal.

13. The authentication and access control method of any of claims 8 to 12, further comprising communicating with an authentication server configured to process the predefined series of biometric signals.

14. The authentication and access control method of any of claims 8 to 13, further comprising a display coupled to the sensor configured to detect the series of biometric signals at any location within the display.
